# EUROPÄISCHE PATENTSCHRIFT

(11) **EP 2 837 073 B1**
(45) Veröffentlichungstag und Bekanntmachung des Hinweises auf die Patenterteilung: **27.06.2018**
(21) Anmeldenummer: 13712547.2
(22) Anmeldetag: 26.03.2013
(51) Int. Cl.: H01T 1/20, H01T 1/22, H01T 4/12

(54) **ÜBERSPANNUNGSABLEITER**
OVER-VOLTAGE ARRESTER
PARASURTENSEUR

(30) Priorität: 12.04.2012 DE 102012103158
(43) Veröffentlichungstag der Anmeldung: 18.02.2015
(73) Patentinhaber: Epcos AG, 81671 München (DE)
(72) Erfinder: SOELTER, Eberhard, 10318 Berlin (DE); DÄUMER, Wolfgang, 15738 Zeuthen (DE); WERNER, Frank, 13591 Berlin (DE)
(74) Vertreter: Epping - Hermann - Fischer
(86) Internationale Anmeldenummer: PCT/EP2013/056429
(87) Internationale Veröffentlichungsnummer: WO 2013/152948

(56) Entgegenhaltungen:
- EP-A1- 0 242 688
- DE-A1- 10 253 166
- DE-A1- 19 641 385
- DE-A1-102005 036 265
- DE-A1-102009 006 543
- US-A- 4 475 055

## Beschreibung

Die Erfindung betrifft einen Überspannungsableiter, bei dem die Ansprechstoßspannung reduziert ist.

Überspannungsableiter lassen sich zum Schutz von Datenleitungen vor einer Überspannung, die mit der Datenleitung verbundene Kommunikationseinrichtung möglicherweise beschädigen würde, einsetzen. Ein weiteres Anwendungsgebiet, bei dem Überspannungsableiter zum Einsatz kommen, ist der Netzschutz. Ein Überspannungsableiter, der an eine Versorgungsleitung eines Wechselstromnetzes angeschlossen ist, dient beispielsweise dem Schutz der Versorgungsleitung vor einer Überspannung bei einem Blitzeinschlag.

Im Unterschied zum Schutz von Datenleitungen, auf denen geringe Ströme fließen, treten auf Versorgungsleitungen in Wechselstromnetzen deutlich höhere Ströme von meistens über 100 A und gegenüber Datenleitungen auch deutlich erhöhte Spannungen, beispielsweise Spannungen von 110 V bis 400 V AC, auf. Beim Auftreten eines Spannungsimpulses auf der Versorgungsleitung in Folge eines Blitzschlages soll der Überspannungsableiter zünden, den Überspannungsimpuls nach Masse ableiten und anschließend wieder erlöschen.

Derartige Ableiter für Versorgungsleitungen von Wechselstromnetzen müssen einen sogenannten Schutzpegel einhalten. In der Vorschrift DIN EN 61643-11 ist beispielsweise gefordert, dass die Ansprechspannung bei einem angelegten Spannungsimpuls der Form 1,2/50 µs mit einer Maximalamplitude von 6 kV einen Wert von typischerweise 1500 V nicht übersteigen darf, wobei gleichzeitig eine minimale Ansprechspannung von 500 V gefordert ist. Der Spannungsimpuls der Form 1,2/50 µs ist dabei ein Gleichspannungsimpuls, der innerhalb von 1,2 µs auf 6 kV ansteigt und innerhalb von 50 µs auf den halben Wert abklingt.

In jüngster Zeit treten vermehrt Forderungen nach einer Reduzierung des Schutzpegels von beispielsweise den genannten 1500 V auf zum Beispiel 1000 V auf. Des Weiteren ist gefordert, dass trotz der Reduzierung des Schutzpegels andere charakteristische Parameter des Ableiters beibehalten werden sollen. Dies bedeutet de facto eine Reduzierung der Ansprechstoßspannung bei Beibehaltung der Ansprechgleichspannung des Ableiters. Beispielsweise soll bei einem Überspannungsableiter zwar die Ansprechstoßspannung reduziert werden, gleichzeitig aber beim Auftreten eines langsamen Spannungsanstieges auf der Leitung, beispielsweise eines Spannungsanstiegs von 400 V innerhalb von 5 ms, wie er im normalen Netzbetrieb vorkommen kann, kein Zünden des Ableiters vor Erreichen einer Ansprechgleichspannung von 600 V auftreten.

Die DE 10 2005 036 265 A1 offenbart einen Überspannungsableiter mit den Merkmalen des Oberbegriffs des Anspruchs 1.

Es besteht ein Bedarf daran, einen Überspannungsableiter anzugeben, bei dem die Ansprechstoßspannung unter Beibehaltung der Ansprechgleichspannung des Ableiters reduziert ist.

Eine Ausführungsform eines derartigen Überspannungsableiters ist im Patentanspruch 1 angegeben.

Der Überspannungsableiter umfasst einen elektrischen Isolator, der einen Hohlraum umgibt, eine Stiftelektrode und eine Rohrelektrode, die in dem Hohlraum angeordnet sind, wobei die Stiftelektrode in die Rohrelektrode hinein ragt. Auf einer dem Hohlraum zugewandten inneren Oberfläche des Isolators ist mindestens ein Zündstrich aufgetragen. Des Weiteren ist auf einer äußeren Oberfläche des Isolators eine Außenmetallisierung angeordnet.

Durch das Aufbringen einer Außenmetallisierung auf dem Isolator, beispielsweise einem Isolator aus einem keramischen Material, in Verbindung mit einem koaxialen Aufbau der Elektroden kann die Ansprechstoßspannung unter Beibehaltung der Ansprechgleichspannung reduziert werden. Durch Kombination von äußeren metallischen Belägen mit einem koaxialen inneren Aufbau gelingt es, die Ansprechstoßspannung, beispielsweise auf einen Schutzpegel von 1000 V, zu reduzieren, wobei eine Ansprechgleichspannung von 600 V bei einem Spannungsanstieg von 400 V pro 5 ms erhalten bleibt. Feldsimulationen zeigen, dass durch diese Kombination beim Aufbau des Überspannungsableiters besonders hohe Feldstärken im Inneren des Ableiters erreicht werden können, insbesondere an der Spitze der Zündstriche, was zu Reduzierung der Ansprechstoßspannung führt.

Die Außenmetallisierung kann beispielsweise ringförmig auf der äußeren Oberfläche des Isolators angebracht sein. Bei der ringförmigen Anordnung der Außenmetallisierung um den Umfang des Ableiters weist die Außenmetallisierung zwei Abschnitte auf. Die Abschnitte sind jeweils auf der äußeren Oberfläche des Isolators angeordnet und erstrecken sich jeweils von einem Rand der äußeren Oberfläche des Isolators ausgehend aufeinander zu. Die beiden Ränder der äußeren Oberfläche des Isolators sind dabei verschiedenen Anschlusselektroden des Überspannungsableiters zugewandt. Die äußere Oberfläche des Isolators kann an jedem ihrer Ränder mit einer der Anschlusselektroden des Überspannungsableiters verbunden sein. Einer der Abschnitte der äußeren Metallisierungsschicht kann mit der Stiftelektrode elektrisch verbunden sein und der andere der Abschnitte der äußeren Metallisierungsschicht kann mit der Rohrelektrode in elektrischem Kontakt stehen. Zwischen den Abschnitten der Außenmetallisierung, in etwa der Mitte der äußeren Oberfläche des Isolators, verbleibt ein Spalt, der frei vom Material der Außenmetallisierung ist und somit eine Isolationsstrecke darstellt.

Bei einer anderen Ausführungsform kann sich die Außenmetallisierung auf der Oberfläche des Isolators einseitig von einem Rand der Oberfläche des Isolators, an dem der Isolator mit einer Anschlusselektrode des Überspannungsableiters verbunden ist, in Richtung auf den anderen Rand der äußeren Oberfläche des Isolators, der mit der anderen Anschlusselektrode verbunden ist, erstrecken. Die Außenmetallisierung erstreckt sich beispielsweise von demjenigen Rand der äußeren Oberfläche des Isolators, der der Stiftelektrode zugewandt ist, in Richtung auf den gegenüberliegenden Rand der äußeren Oberfläche des Isolators, der der Rohrelektrode zugewandt ist. Die Außenmetallisierung steht mit der Stiftelektrode in elektrischem Kontakt und endet in einem Abstand von dem Rand der äußeren Oberfläche des Isolators, der der Rohrelektrode zugewandt ist.

Die Erfindung wird im Folgenden anhand von Figuren, die Ausführungsbeispiele der vorliegenden Erfindung zeigen, näher erläutert.

Es zeigen:
- Figur 1: eine Ausführungsform eines Überspannungsableiters ohne äußere Metallisierung mit einer Feldlinienverteilung vor einem Zünden des Ableiters,
- Figur 2: eine Ausführungsform eines Überspannungsableiters mit einer zweiseitigen äußeren Metallisierung und einer zugehörigen Feldlinienverteilung vor einem Zünden des Ableiters,
- Figur 3: eine Ausführungsform eines Überspannungsableiters mit einer einseitigen äußeren Metallisierung und einer zugehörigen Feldlinienverteilung vor einem Zünden des Ableiters,
- Figur 4: eine perspektivische Ansicht einer Ausführungsform eines Überspannungsableiters mit zweiseitiger Außenmetallisierung.

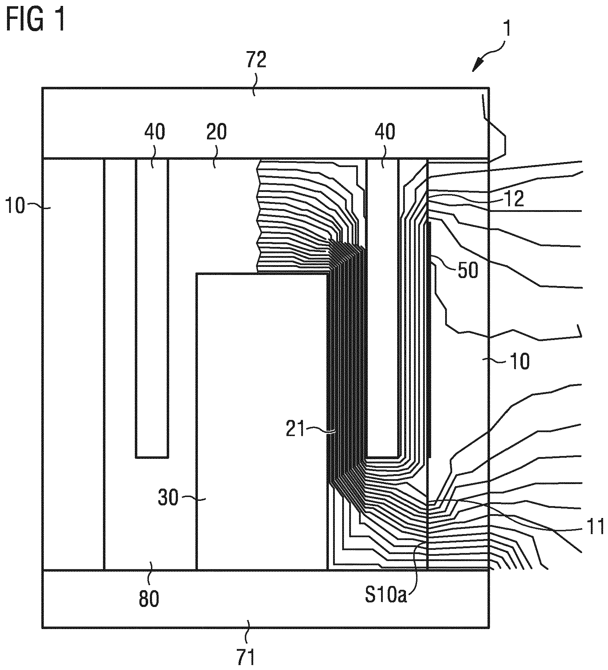

Figur 1 zeigt eine Ausführungsform 1 eines elektrischen Bauelements eines Überspannungsableiters mit einem koaxialen Aufbau von Elektroden im Inneren des Spannungsableiters. Der Überspannungsableiter 1 umfasst einen elektrischen Isolator 10, der einen Hohlraum 20 umgibt. Der Isolator 10 kann ein keramisches Material, beispielsweise ein Material das Aluminiumoxid, enthalten. In dem Hohlraum 20 ist eine Stiftelektrode 30 und eine Rohrelektrode 40 angeordnet. Der Hohlraum 20 zwischen der Stiftelektrode 30, der Rohrelektrode 40 und dem elektrischen Isolator 10 kann mit einer Gasmischung, die beispielsweise einen Argon-Anteil von zirka 35 % bis 95 %, einen Wasserstoff-Anteil von 5 % bis 20 % und einen Neon-Anteil von bis zu 50 % enthält, gefüllt sein.

Die Stiftelektrode 30 ragt in die Rohrelektrode 40 hinein und ist elektrisch mit einer Anschlusselektrode 71 verbunden. Die Rohrelektrode 40 umgibt die Stiftelektrode 30 und ist elektrisch mit einer Anschlusselektrode 72 verbunden. Die Rohrelektrode und die Stiftelektrode sind derart angeordnet, dass zwischen ihnen ein Spalt 21 gebildet wird, der einen Entladungsraum des Überspannungsableiters bildet. Die Stiftelektrode und die Rohrelektrode können Kupfer, Eisen oder eine Wolfram-Kupfermischung enthalten. Die Anschlusselektroden 71, 72 können aus Kupfer oder Fe-Ni-Legierung hergestellt sein.

Auf einer inneren Oberfläche S10a des Isolators 10, die dem Hohlraum 20 zugewandt ist, kann ein oder mehrere Zündstriche 50 aufgetragen sein. Der Zündstrich 50 kann ein Material aus Graphit enthalten. Durch einen derartigen Zündstrich kann vor allem ein gutes dynamisches Zündverhalten des Ableiterbauelements sichergestellt werden. Im Entladefall fließt ein Strom von der Anschlusselektrode 71 zur Stiftelektrode 30, über die Funkenstrecke des Entladungsraums 21 zur Rohrelektrode 40 und von dort zur Anschlusselektrode 72. Im Entladungsraum 21 erfolgt die Stoßstromentladung vor allem in radialer Weise.

In Figur 1 sind die bei der Stoßstromentladung auftretenden Feldlinien im rechten Teil des Überspannungsableiters eingezeichnet. Aus Vereinfachungsgründen ist der Feldlinienverlauf nur im rechten Teil des Überspannungsableiterbauelements eingezeichnet. Im linken Teil des Überspannungsableiters verlaufen die Feldlinien entsprechend. Die Feldlinien geben Äquipotenziallinien an. Die Feldlinien verlaufen durch den Entladungsraum 21 des Hohlraums 20 zwischen der Stiftelektrode 30 und Rohrelektrode 40 und im Teil des Hohlraums 20 zwischen dem Isolator 10 und die Rohrelektrode 40. Die Feldlinien treten an Restisolationsbereichen 11, 12 der inneren Oberfläche des Isolators, die nicht von dem Zündstrich 50 bedeckt sind, in die äußere Umgebung des Bauelements aus.

Bei den folgenden Ausführungsformen 2 und 3 des Überspannungsableiters sind gleiche Elemente wie in Figur 1 mit gleichen Bezugszeichen bezeichnet. Es wird im Folgenden nur noch auf die Unterschiede zu der in Figur 1 gezeigten Ausführungsformen 1 des Überspannungsableiters eingegangen. Bei den Ausführungsformen 2 und 3 des Überspannungsableiters ist im Unterschied zur Ausführungsform 1 zusätzlich eine Außenmetallisierung auf einer äußeren Oberfläche S10b des Isolators 10 angeordnet.

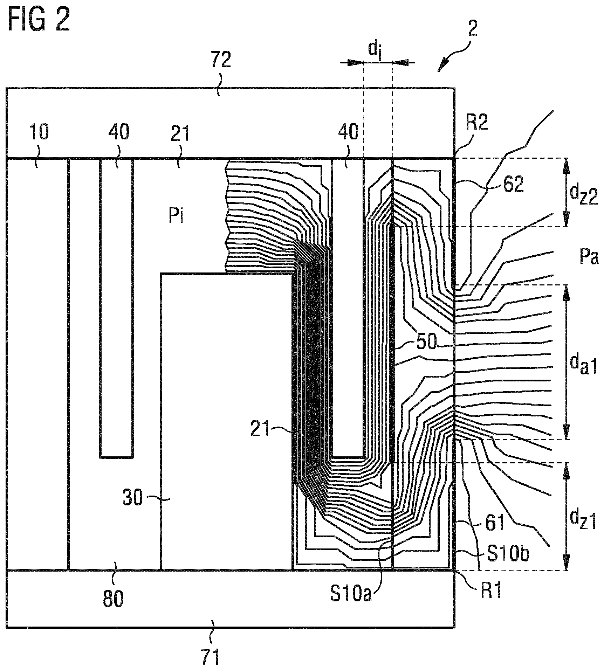

Bei der in Figur 2 gezeigten Ausführungsform 2 des Überspannungsableiters umfasst die Außenmetallisierung einen Abschnitt 61 und einen Abschnitt 62, die auf der äußeren Oberfläche S10b des Isolators in einem Abstand dₐ₁ angeordnet sind. Der Abschnitt 61 der Außenmetallisierung ist mit der Anschlusselektrode 71 verbunden und der Abschnitt 62 der Außenmetallisierung ist mit der Anschlusselektrode 72 verbunden. Der Abschnitt 61 der Außenmetallisierung erstreckt sich auf der äußeren Oberfläche S10b des Isolators 10 ausgehend von einem Rand R1 der äußeren Oberfläche des Isolators, der der Außenelektrode 71 bzw. der Stiftelektrode 30 zugewandt ist, in Richtung auf den Abschnitt 62 der Außenmetallisierung. Der Abschnitt 62 der Außenmetallisierung erstreckt sich auf der äußeren Oberfläche S10b des Isolators 10 ausgehend von einem dem Rand R1 gegenüberliegenden Rand R2 der äußeren Oberfläche des Isolators, der mit der Außenelektrode 72 verbunden ist bzw. der Rohrelektrode 40 zugewandt ist, in Richtung auf den Abschnitt 61 der Außenmetallisierung. Zwischen den Metallisierungsschichten 61 und 62 wird ein Spalt gebildet.

Die Spaltbreite bzw. der Abstand dₐ₁ zwischen dem Abschnitt 61 und dem Abschnitt 62 der Außenmetallisierung ist abhängig vom inneren Hauptelektrodenabstand dᵢ und dem Füllgasdruck pᵢ der Gasentladungsstrecke 21. Wenn pₐ den Außendruck der Umgebung des Isolators (üblicherweise 1 at) und d_{a1,min} den minimalen Abstand der Metallisierung und 61, 62 im Spaltbereich bezeichnet, können die Abschnitte 61, 62 der Außenmetallisierung derart auf der äußeren Oberfläche S10b des Isolators angeordnet werden, dass sich der minimale Abstand zwischen den Metallisierungen zu d_{a1,min} = pᵢ/pₐ * dᵢ ergibt.

Um mögliche Gleitentladungseffekte einer Entladung auf der äußeren Oberfläche S10b des Isolatorkörpers 10 zu verhindern, kann der Außenabstand dₐ₁ mindestens so groß sein, wie das doppelte des Produkts aus dem Abstand dᵢ zwischen der Stiftelektrode 30 und der Rohrelektrode 40 und dem Quotienten aus dem Innendruck pᵢ des Füllgases 80 im Hohlraum 20 und dem äußeren Atmosphärendruck pₐ der Umgebung des Überspannungsableiters. Vorausgesetzt werden dabei Füllgase mit einer ähnlichen Paschenkurve wie für Luft. Somit ergibt sich die Beziehung dₐ₁ > 2 * pᵢ / pₐ * dᵢ bzw. für einen Außendruck von pₐ = 1 at ergibt sich dₐ₁ vorzugsweise zu dₐ₁ > 2 * pᵢ * dᵢ.

Sollte die Gasentladungsstrecke undicht werden, so sollte die Außenisolationsstrecke dₐ₁ größer sein als der Hauptelektrodenspalt dᵢ, da ansonsten anstelle einer Entladung im Entladungsraum 21 eine Außenentladung auftreten würde. Daher kann der Abstand dₐ₁ zu dₐ₁ > 2 * dᵢ gewählt werden.

Der Zündstrich 50 kann in einem Abstand d_{z1} von der Außenelektrode 71 entfernt und in einem Abstand d_{z2} von der Außenelektrode 72 entfernt angeordnet sein. Die Länge des Abschnitts 61 der Außenmetallisierung kann größer als der Abstand d_{z1} des Zündstrichs sein. Die Länge des Abschnitts 62 der Außenmetallisierung kann größer als der Abstand d_{z2} des Zündstrichs sein.

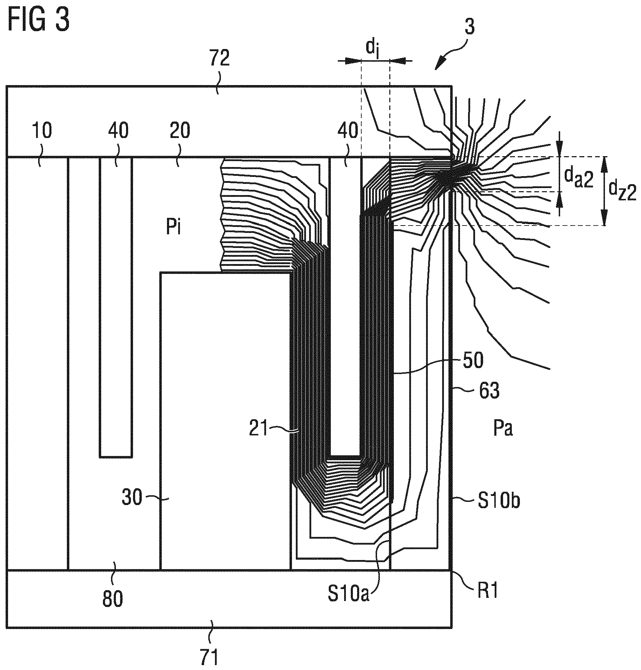

Figur 3 zeigt eine Ausführungsform 3 des Überspannungsableiters, bei der als äußere Metallisierung nur eine Außenmetallisierungsschicht 63 auf der äußeren Oberfläche S10b des Isolators 10 angeordnet ist. Die Außenmetallisierung 63 erstreckt sich auf der äußeren Oberfläche S10b des Isolators ausgehend von dem Rand R1 der äußeren Oberfläche des Isolators, der der Anschlusselektrode 71 bzw. der Stiftelektrode 30 zugewandt ist, in Richtung auf den gegenüberliegenden Rand R2 der äußeren Oberfläche des Isolators, der der Anschlusselektrode 72 bzw. der Rohrelektrode 40 zugewandt ist. Die Außenmetallisierungsschicht 63 ist mit der Außenelektrode 71 verbunden und zu der Außenelektrode 72 im Abstand dₐ₂ angeordnet. Die Außenmetallisierung 63 endet in einem Abstand dₐ₂ von dem Rand R2 entfernt.

Der Zündstrich 50 ist in einem Abstand d_{z2} von der Außenelektrode 72 angeordnet. Der Abstand dₐ₂ der Außenmetallisierung 63 von der Außenelektrode 72, der der Restisolationsstrecke der Außenmetallisierung zur Gegenelektrode 72 entspricht, ist kürzer als der Abstand d_{z2} des Zündstrichs 50 von der Außenelektrode 72.

Des Weiteren ist der Abstand dₐ₂ zwischen der Außenmetallisierung 63 und der Außenelektrode 72 mindestens so groß wie das Doppelte des Produkts aus dem Abstand dᵢ zwischen der Stiftelektrode 30 und der Rohrelektrode 40 und dem Quotienten aus dem Innendruck pᵢ des im Hohlraum 20 befindlichen Füllgases 80 und dem äußeren Atmosphärendruck pₐ der Umgebung des Überspannungsableiters.

Bei der Ausführungsform 3 des Überspannungsableiters ist der Abstand dₐ₂ der Außenmetallisierungsschicht 63 zur Außenelektrode 72 vom inneren Elektrodenabstand dᵢ, dem Füllgasdruck pᵢ der Gasentladungsstrecke 21 sowie dem äußeren Atmosphärendruck pₐ abhängig. Der minimale Abstand d_{a2,min} der Außenmetallisierung 63 von der Anschlusselektrode 72 kann zu d_{a2,min} = pᵢ/pₐ * dᵢ gewählt werden.

Um mögliche Gleitentladungseffekte einer Entladung auf der äußeren Oberfläche S10b des Isolators 10 zu verhindern, sollte der Abstand dₐ₂ zwischen der Außenmetallisierung 63 und der Außenelektrode 72 das doppelte des Produkts aus dem Abstand dᵢ zwischen der Stiftelektrode 30 und der Rohrelektrode 40 und dem Quotienten aus dem Innendruck pᵢ des Füllgases 80 im Hohlraum 20 und dem äußeren Atmosphärendruck pₐ der Umgebung des Überspannungsableiters betragen. Vorausgesetzt werden dabei Füllgase mit einer ähnlichen Paschenkurve wie für Luft. Somit ergibt sich die Beziehung dₐ₂ > 2 * pᵢ / pₐ * dᵢ bzw. für einen Außendruck von pₐ = 1 at ergibt sich dₐ₂ vorzugsweise zu dₐ₂ > 2 * pᵢ * dᵢ.

Wenn die Gasentladungsstrecke undicht wird, so sollte die Außenisolationsstrecke dₐ₂ größer sein als der Hauptelektrodenspalt dᵢ, da ansonsten anstelle einer Entladung im Entladungsraum 21 eine Außenentladung auftreten würde. Daher kann der Abstand dₐ₂ zu dₐ₂ > 2 * dᵢ gewählt werden.

In Abhängigkeit von den geforderten Spannungsanstiegen kann die Schichtdicke der Außenmetallisierungen 61, 62, 63 zwischen 3 µm bis 25 µm betragen. Es kann jedoch auch eine metallene Kappe mit einer Dicke im Millimeter-Bereich über den Isolator 10 geschoben werden.

Wie den Feldlinienverteilungen in den Figuren 2 und 3 zu entnehmen ist, werden die Feldlinien an den Enden des Zündstrichs 50 und den Enden der Außenmetallisierung zusammengedrängt, so dass in diesen Bereichen hohe Feldstärken im Inneren des Ableiters erreicht werden, die zu einer Reduzierung der Ansprechstoßspannung der Bauelemente führen. Gleichzeitig kann durch die Ausführungsformen 2 und 3 des Überspannungsableiters die Ansprechgleichspannung, beispielsweise eine statische Zündspannung von zirka 600 V, beibehalten werden.

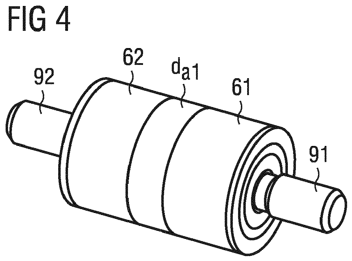

Figur 4 zeigt eine perspektivische Ansicht des Überspannungsableiters gemäß der in Figur 2 gezeigten Ausführungsform 2. Der Überspannungsableiter weist einen um den Hohlraum 20 zylinderförmig angeordneten Isolator 10 auf. Der Isolator 10 ist an seinen Rändern mit der Außenelektrode 71 und der Außenelektrode 72 verbunden. Die Anschlusselektroden 71, 72 sind mit Anschlussbolzen 91, 92 verbunden. Die Außenmetallisierung ist ringförmig auf der äußeren Oberfläche S10b des Isolators angeordnet. Die beiden Abschnitte 61, 62 der Außenmetallisierung sind um den Abstand dₐ₁ beabstandet zueinander angeordnet.

### Bezugszeichenliste

- 1, 2, 3: Ausführungsformen des Überspannungsableiters
- 10: Isolator
- 20: Hohlraum
- 21: Entladungsraum
- 30: Stiftelektrode
- 40: Rohrelektrode
- 50: Zündstrich
- 61, 62, 63: Außenmetallisierung
- 71, 72: Anschlusselektroden
- 80: Füllgas
- 91, 92: Anschlussbolzen

## Patentansprüche

1. Überspannungsableiter, umfassend:
- einen elektrischen Isolator (10), der einen Hohlraum (20) umgibt,
- eine Stiftelektrode (30) und eine Rohrelektrode (40), die in dem Hohlraum (20) angeordnet sind, wobei die Stiftelektrode (30) in die Rohrelektrode (40) hinein ragt,
- wobei auf einer dem Hohlraum (20) zugewandten inneren Oberfläche (S10a) des Isolators mindestens ein Zündstrich (50) aufgetragen ist, **dadurch gekennzeichnet, dass** auf einer äußeren Oberfläche (S10b) des Isolators (10) eine Außenmetallisierung (61, 62, 63) angeordnet ist.

2. Überspannungsableiter nach Anspruch 1,
- wobei der Isolator (10) zylinderförmig um den Hohlraum (20) angeordnet ist,
- wobei die Außenmetallisierung (61, 62, 63) ringförmig auf der äußeren Oberfläche (S10b) des Isolators (10) angeordnet ist.

3. Überspannungsableiter nach einem der Ansprüche 1 oder 2, umfassend:
- eine erste Anschlusselektrode (71), die mit der Stiftelektrode (30) zum Anlegen eines Spannungspotentials verbunden ist,
- eine zweite Anschlusselektrode (72), die mit der Rohrelektrode (40) zum Anlegen eines Spannungspotentials verbunden ist.

4. Überspannungsableiter nach einem der Ansprüche 1 bis 3, wobei die Außenmetallisierung einen ersten Abschnitt (61) und einen zweiten Abschnitt (62) umfasst, die auf der äußeren Oberfläche (S10b) des Isolators (10) in einem Abstand (dₐ₁) zueinander beabstandet angeordnet sind.

5. Überspannungsableiter nach Anspruch 4,
wobei sich der erste Abschnitt (61) der Außenmetallisierung auf der äußeren Oberfläche (S10b) des Isolators (10) ausgehend von einem ersten Rand (R1) der äußeren Oberfläche des Isolators, der der ersten Außenelektrode (71) zugewandt ist, und der zweite Abschnitt (62) der Außenmetallisierung auf der äußeren Oberfläche (S10b) des Isolators (10) ausgehend von einem zweiten Rand (R2) der äußeren Oberfläche des Isolators, der zu dem ersten Rand (R1) gegenüberliegend angeordnet ist, aufeinander zu erstrecken.

6. Überspannungsableiter nach einem der Ansprüche 4 oder 5,
- wobei der Zündstrich (50) in einem ersten Abstand (d_{z1}) von der ersten Außenelektrode (71) angeordnet ist,
- wobei die Länge des ersten Abschnitts (61) der Außenmetallisierung größer als der erste Abstand (d_{z1}) des Zündstrichs (50) ist,
- wobei der Zündstrich (50) in einem zweiten Abstand (d_{z2}) von der zweiten Außenelektrode (72) angeordnet ist,
- wobei die Länge des zweiten Abschnitts (62) der Außenmetallisierung größer als der zweite Abstand (d_{z2}) des Zündstrichs (50) ist.

7. Überspannungsableiter nach einem der Ansprüche 4 bis 6, wobei der Abstand (dₐ₁) zwischen dem ersten und zweiten Abschnitt (61, 62) der Außenmetallisierung mindestens so groß ist wie das Doppelte des Produkts aus dem Abstand (dᵢ) zwischen der Stiftelektrode (30) und der Rohrelektrode (40) und dem Quotienten aus dem Innendruck (pᵢ) eines Füllgases im Hohlraum (20) und dem äußeren Atmosphärendruck (pₐ) der Umgebung des Überspannungsableiters.

8. Überspannungsableiter nach einem der Ansprüche 4 bis 7,
wobei der erste Abschnitt (61) der Außenmetallisierung mit der ersten Anschlusselektrode (71) und der zweite Abschnitt (62) der Außenmetallisierung mit der zweiten Anschlusselektrode (72) verbunden ist.

9. Überspannungsableiter nach Anspruch 3,
wobei sich die Außenmetallisierung (63) ausgehend von einem ersten Rand (R1) der äußeren Oberfläche (S10b) des Isolators (10), der näher an der ersten Anschlusselektrode (71) als an der zweiten Anschlusselektrode (72) liegt, in Richtung auf einen zweiten Rand (R2) der äußeren Oberfläche (S10b) des Isolators, der dem ersten Rand (R1) gegenüber liegt, erstreckt und in einem Abstand (dₐ₂) von dem zweiten Rand (R2) angeordnet ist.

10. Überspannungsableiter nach Anspruch 3,
wobei die Außenmetallisierung (63) mit der ersten Außenelektrode (71) verbunden ist und zu der zweiten Außenelektrode (72) um den Abstand (dₐ₂) beabstandet angeordnet ist.

11. Überspannungsableiter nach einem der Ansprüche 9 oder 10,
- wobei der Zündstrich (50) in einem Abstand (d_{z2}) von der zweiten Außenelektrode (72) angeordnet ist,
- wobei der Abstand (dₐ₂) der Außenmetallisierung (63) von der zweiten Außenelektrode (72) kürzer ist als der erste Abstand (d_{z1}) des Zündstrichs (50).

12. Überspannungsableiter nach einem der Ansprüche 9 bis 11, wobei der Abstand (dₐ₂) zwischen der Außenmetallisierung (63) und der zweiten Außenelektrode (72) mindestens so groß ist wie das Doppelte des Produkts aus dem Abstand (dᵢ) zwischen der Stiftelektrode (30) und der Rohrelektrode (40) und dem Quotienten aus dem Innendruck (pᵢ) eines Füllgases (80) im Hohlraum (20) und dem äußeren Atmosphärendruck (pₐ) der Umgebung des Überspannungsableiters.

## Claims

1. Surge arrester, comprising:
- an electrical insulator (10), which surrounds a cavity (20),
- a pin electrode (30) and a tube electrode (40), which are arranged in the cavity (20), wherein the pin electrode (30) projects into the tube electrode (40),
- wherein at least one ignition strip (50) is applied on an inner surface (S10a) of the insulator facing the cavity (20),
**characterized in that**
- an outer metallization (61, 62, 63) is arranged on an outer surface (SlOb) of the insulator (10).

2. Surge arrester according to Claim 1,
- wherein the insulator (10) is arranged cylindrically around the cavity (20),
- wherein the outer metallization (61, 62, 63) is arranged in a ring-shaped fashion on the outer surface (SlOb) of the insulator (10).

3. Surge arrester according to either of Claims 1 and 2, comprising:
- a first connection electrode (71), which is connected to the pin electrode (30) for the purpose of applying a voltage potential,
- a second connection electrode (72), which is connected to the tube electrode (40) for the purpose of applying a voltage potential.

4. Surge arrester according to any of Claims 1 to 3, wherein the outer metallization comprises a first section (61) and a second section (62), which are arranged in a manner spaced apart at a distance (dₐ₁) from one another on the outer surface (SlOb) of the insulator (10).

5. Surge arrester according to Claim 4,
wherein the first section (61) of the outer metallization on the outer surface (SlOb) of the insulator (10), proceeding from a first edge (R1) of the outer surface of the insulator, said first edge facing the first external electrode (71), and the second section (62) of the outer metallization on the outer surface (SlOb) of the insulator (10), proceeding from a second edge (R2) of the outer surface of the insulator, said second edge being arranged opposite the first edge (R1), extend toward one another.

6. Surge arrester according to either of Claims 4 and 5,
- wherein the ignition strip (50) is arranged at a first distance (d_{z1}) from the first external electrode (71),
- wherein the length of the first section (61) of the outer metallization is greater than the first distance (d_{z1}) of the ignition strip (50),
- wherein the ignition strip (50) is arranged at a second distance (d_{z2}) from the second external electrode (72),
- wherein the length of the second section (62) of the outer metallization is greater than the second distance (d_{z2}) of the ignition strip (50).

7. Surge arrester according to any of Claims 4 to 6,
wherein the distance (dₐ₁) between the first and second sections (61, 62) of the outer metallization is at least of the same magnitude as double the product of the distance (dᵢ) between the pin electrode (30) and the tube electrode (40) and the quotient of the internal pressure (pᵢ) of a filling gas in the cavity (20) and the external atmospheric pressure (pₐ) of the surroundings of the surge arrester.

8. Surge arrester according to any of Claims 4 to 7,
wherein the first section (61) of the outer metallization is connected to the first connection electrode (71) and the second section (62) of the outer metallization is connected to the second connection electrode (72).

9. Surge arrester according to Claim 3,
wherein the outer metallization (63), proceeding from a first edge (R1) of the outer surface (SlOb) of the insulator (10), said first edge being closer to the first connection electrode (71) than to the second connection electrode (72), extends in the direction of a second edge (R2) of the outer surface (SlOb) of the insulator, said second edge being opposite the first edge (R1), and is arranged at a distance (dₐ₂) from the second edge (R2) .

10. Surge arrester according to Claim 3,
wherein the outer metallization (63) is connected to the first external electrode (71) and is arranged in a manner spaced apart from the second external electrode (72) by the distance (dₐ₂).

11. Surge arrester according to either of Claims 9 and 10,
- wherein the ignition strip (50) is arranged at a distance (d_{z2}) from the second external electrode (72),
- wherein the distance (dₐ₂) between the outer metallization (63) and the second external electrode (72) is shorter than the first distance (d_{z1}) of the ignition strip (50).

12. Surge arrester according to any of Claims 9 to 11,
wherein the distance (dₐ₂) between the outer metallization (63) and the second external electrode (72) is at least of the same magnitude as double the product of the distance (dᵢ) between the pin electrode (30) and the tube electrode (40) and the quotient of the internal pressure (pᵢ) of a filling gas (80) in the cavity (20) and the external atmospheric pressure (pₐ) of the surroundings of the surge arrester.

## Revendications

1. Parasurtenseur, comprenant :
- un isolateur électrique (10) qui entoure une cavité (20),
- une électrode en forme de barreau (30) et une électrode tubulaire (40) qui sont disposées dans la cavité (20), l'électrode en forme de barreau (30) rentrant dans l'électrode tubulaire (40),
- au moins une bande d'allumage (50) étant appliquée sur une surface intérieure (S10a) tournée vers la cavité (20) de l'isolateur,
**caractérisé en ce que**, sur une surface extérieure (S10b) de l'isolateur (10), une métallisation extérieure (61, 62, 63) est disposée.

2. Parasurtenseur selon la revendication 1,
- dans lequel l'isolateur (10) en forme de cylindre est disposé autour de la cavité (20),
- la métallisation extérieure (61, 62, 63) de forme annulaire est disposée sur la surface extérieure (S10b) de l'isolateur (10).

3. Parasurtenseur selon une des revendications 1 et 2, comprenant :
- une première électrode de raccordement (71) qui est connectée à l'électrode en forme de barreau (30) pour appliquer un potentiel de tension,
- une seconde électrode de raccordement (72) qui est connectée à l'électrode tubulaire (40) pour appliquer un potentiel de tension.

4. Parasurtenseur selon une des revendications 1 à 3,
dans lequel la métallisation extérieure comprend une première section (61) et une seconde section (62) qui sont disposées sur la surface extérieure (S10b) de l'isolateur (10) à distance l'une de l'autre (dₐ₁) .

5. Parasurtenseur selon la revendication 4,
dans lequel la première section (61) de la métallisation extérieure est disposée sur la surface extérieure (S10b) de l'isolateur (10) en partant d'un premier bord (R1) de la surface extérieure de l'isolateur qui est tourné vers la première électrode extérieure (71), et la seconde section (62) de la métallisation extérieure sur la surface extérieure (S10b) de l'isolateur (10) en partant d'un second bord (R2) de la surface extérieure de l'isolateur qui est disposé à l'opposé du premier bord (R1) de manière à s'étendre l'une sur l'autre.

6. Parasurtenseur selon une des revendications 4 et 5,
- dans lequel la bande d'allumage (50) est disposée à une première distance (d_{z1}) de la première électrode extérieure (71),
- la longueur de la première section (61) de la métallisation extérieure est supérieure à la première distance (d_{z1}) par rapport à la bande d'allumage (50),
- la bande d'allumage (50) est disposée à une seconde distance (d_{z2}) de la seconde électrode extérieure (72),
- la longueur de la seconde section (62) de la métallisation extérieure est supérieure à la seconde distance (d_{z2}) par rapport à la bande d'allumage (50).

7. Parasurtenseur selon une des revendications 4 à 6,
dans lequel la distance (dₐ₁) entre les premières et seconde sections (61, 62) de la métallisation extérieure est au moins égale au double du produit de la distance (dᵢ) entre l'électrode en forme de barreau (30) et l'électrode tubulaire (40) et du quotient entre la pression intérieure (pᵢ) d'un gaz de remplissage dans la cavité (20) et la pression atmosphérique extérieure (pₐ) de l'environnement du parasurtenseur.

8. Parasurtenseur selon une des revendications 4 à 7,
dans lequel la première section (61) de la métallisation extérieure est connectée à la première électrode de raccordement (71) et la seconde section (62) de la métallisation extérieure à la seconde électrode de raccordement (72) .

9. Parasurtenseur selon la revendication 3,
dans lequel la métallisation extérieure (63), en partant d'un premier bord (R1) de la surface extérieure (S10b) de l'isolateur (10) qui est plus proche de la première électrode de raccordement (71) que de la seconde électrode de raccordement (72), s'étend en direction d'un second bord (R2) de la surface extérieure (S10b) de l'isolateur qui est opposé au premier bord (R1) et est disposée à une distance (dₐ₂) du second bord (R2) .

10. Parasurtenseur selon la revendication 3,
dans lequel la métallisation extérieure (63) est connectée à la première électrode extérieure (71) et est disposée espacée de la seconde électrode (72) d'une distance (dₐ₂) .

11. Parasurtenseur selon une des revendications 9 et 10,
- dans lequel la bande d'allumage (50) est disposée à une distance (d_{z2}) de la seconde électrode extérieure (72),
- la distance (dₐ₂) entre la métallisation extérieure (63) et la seconde électrode extérieure (72) est plus courte que la première distance (d_{z1}) par rapport à la bande d'allumage (50).

12. Parasurtenseur selon une des revendications 9 à 11,
dans lequel la distance (dₐ₂) entre la métallisation extérieure (63) et la seconde électrode extérieure (72) est au moins égale au double du produit de la distance (dᵢ) entre l'électrode en forme de barreau (30) et l'électrode tubulaire (40) et du quotient entre la pression intérieure (pᵢ) d'un gaz de remplissage (80) dans la cavité (20) et la pression atmosphérique extérieure (pₐ) de l'environnement du parasurtenseur.
